# EUROPEAN PATENT SPECIFICATION

(11) **EP 4 047 338 B1**
(45) Date of publication and mention of the grant of the patent: **09.07.2025**
(21) Application number: 22157410.6
(22) Date of filing: 18.02.2022
(51) Int. Cl.: G01L 1/18, G01L 1/20, G01L 1/22

(54) **PROCESS FOR MAKING A FLEXIBLE SENSOR MEMBRANE**
VERFAHREN ZUR HERSTELLUNG EINER FLEXIBLEN SENSORMEMBRAN
PROCÉDÉ DE FABRICATION D'UNE MEMBRANE DE CAPTEUR FLEXIBLE

(30) Priority: 22.02.2021 IT 202100004046
(43) Date of publication of application: 24.08.2022
(73) Proprietor: Weabios S.r.l., 56123 Pisa (PI) (IT)
(72) Inventor: TOGNETTI, Alessandro, 55100 LUCCA (IT); ARCARISI, Lucia, 56125 PISA (IT); CARBONARO, Nicola, 56100 CALCI (IT)
(74) Representative: Lunati & Mazzoni S.r.L.

(56) References cited:
- US-A1- 2017 038 881
- US-A1- 2018 163 410
- YAN KE ET AL: "Inkjet printing for flexible and wearable electronics", APL MATERIALS, AMERICAN INSTITUTE OF PHYSICS, 2 HUNTINGTON QUADRANGLE, MELVILLE, NY 11747, vol. 8, no. 12, 16 December 2020 (2020-12-16), XP012260143, DOI: 10.1063/5.0031669
- GE LIANGJIN ET AL: "Silver lines electrode patterned by transfer printing", MICROELECTRONIC ENGINEERING, vol. 97, 1 September 2012 (2012-09-01), NL, pages 289 - 293, XP093218073, ISSN: 0167-9317, DOI: 10.1016/j.mee.2012.04.031

## Description

The present invention relates to a process for making a sensor membrane of the type specified in the preamble to the first claim.

In particular, the present invention relates to a process for making a sensor membrane for wearable devices.

Sensor membranes for wearable devices or similar are currently known, for instance from US2017/038881A1.

These are membranes, or rather of flexible elements extending mainly along a surface. These membranes are designed to measure deformations and the resulting stresses acting on the membrane, in particular through the use of piezoresistive elements. The piezoresistive elements are known to vary their electrical resistance as a function of their deformation. If an electric current flows through these elements, the resistance reading, given by the variation of the electric variables of the current flowing through them, obtains direct information on the deformation and therefore on the stress or strain faced by these elements.

These sensor membranes have recently become widely used, particularly in wearable elements to measure variables related to the human body, under conditions of physical activity, for health purposes and so on.

The known sensor membranes generally consist of sandwiches comprising a central piezoresistive layer and two peripheral conductive layers with mutually crossed and perpendicular linear flat electrodes.

Examples of the known process are disclosed in US 2018/163410 and by A YAN KE ET AL in the article "Inkjet printing for flexible and wearable electronics.

The known technique described includes some important drawbacks.

Indeed, such sensor membranes do not have adequate flexibility and elasticity to constitute a portion of a wearable device.

Moreover, the membranes themselves do not have adequate precision and are very complex and expensive.

Various sensor membranes have been developed to overcome these drawbacks.

For example, such a sensor membrane is described in patent applications US 2014/0007704 A1 and US 2016/0278709 A1. In these patent applications, sensor membranes comprising a plurality of layers and which are very complex and expensive are described.

Another type of sensor membrane is described in patent applications WO 2017/185050 A1 and WO 2016/070078 A1. However, in these patent applications, the sensors are developed over the entire plane and do not allow for a precise detection of resistances at different points in the plane.

In this situation, the technical task underlying the present invention is to devise process for making a sensor membrane and a sensor membrane capable of substantially obviating at least part of the aforementioned drawbacks.

In the context of said technical task, it is an important scope of the invention to obtain a sensor membrane which allows precise and punctual measurements along its prevalent development surface area.

Another important scope of the invention is to realize a sensor membrane which is flexible, elastic and wearable, in particular as a shoe insole.

Still another scope of the present invention is to realize a sensor membrane that is economical and robust.

The specified technical task and purposes are achieved by process for making a sensor membrane as claimed in the appended independent claim.

Preferred technical solutions are disclosed in the dependent claims.

The features and advantages of the invention are hereinafter clarified by the detailed description of preferred embodiments of the invention, with reference to the appended drawings, wherein:
the **Fig. 1** shows in axonometry a sensor membrane made by the process according to the invention;
the **Fig. 2** illustrates a cross-section of the sensor membrane made by the process according to the invention;

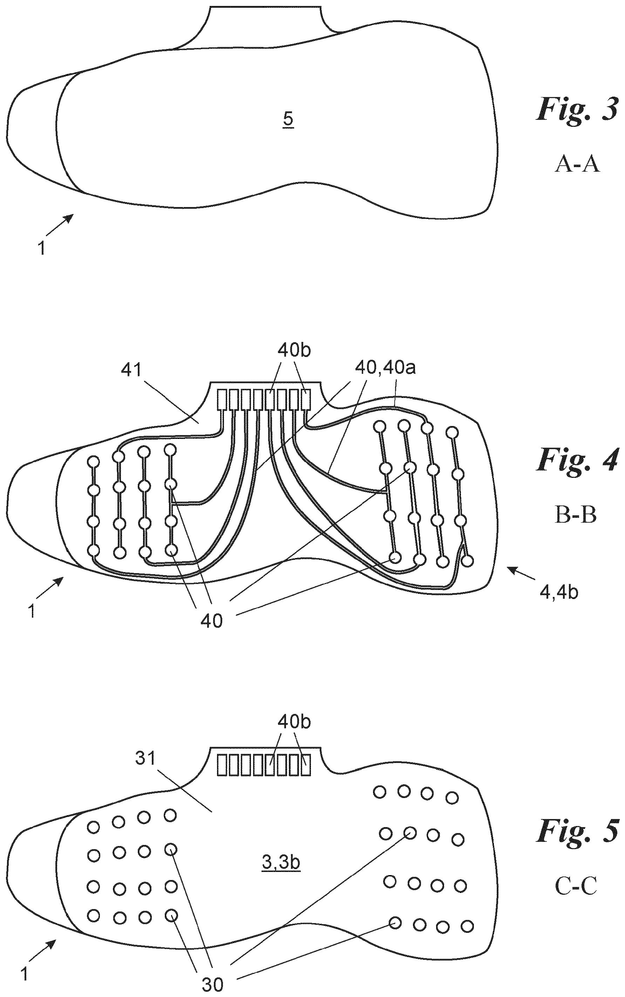

the **Fig. 3** schematises the section A-A shown in Fig. 2;
the **Fig. 4** schematises the section B-B shown in Fig. 2;
the **Fig. 5** schematises the section C-C shown in Fig. 2;

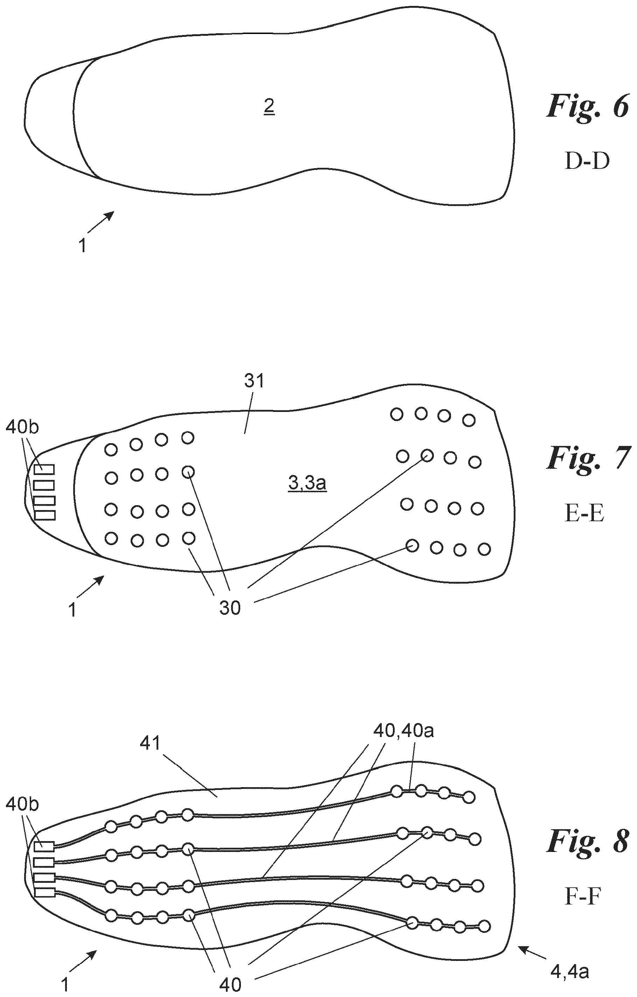

the **Fig. 6** schematises the section D-D shown in Fig. 2;
the **Fig. 7** schematises the section E-E shown in Fig. 2; and
the **Fig. 8** schematises the section F-F shown in Fig. 2.

In the present document, the measurements, values, shapes and geometric references (such as perpendicularity and parallelism), when associated with words like "about" or other similar terms such as "approximately" or "substantially", are to be considered as except for measurement errors or inaccuracies due to production and/or manufacturing errors, and, above all, except for a slight divergence from the value, measurements, shape, or geometric reference with which it is associated. For instance, these terms, if associated with a value, preferably indicate a divergence of not more than 10% of the value.

Moreover, when used, terms such as "first", "second", "higher", "lower", "main" and "secondary" do not necessarily identify an order, a priority of relationship or a relative position, but can simply be used to clearly distinguish between their different components.

Unless otherwise specified, as results in the following discussions, terms such as "treatment", "computing", "determination", "calculation", or similar, refer to the action and/or processes of a computer or similar electronic calculation device that manipulates and/or transforms data represented as physical, such as electronic quantities of registers of a computer system and/or memories in, other data similarly represented as physical quantities within computer systems, registers or other storage, transmission or information displaying devices.

The measurements and data reported in this text are to be considered, unless otherwise indicated, as performed in the International Standard Atmosphere ICAO (ISO 2533:1975).

With reference to the Figures, the sensor membrane according to the invention is globally indicated by the number **1.**

It is capable of being coupled, and preferably is coupled and constrained, to support **101** such as a wearable item or a garment or otherwise. Such support 101 is preferably an insole of a footwear, such as a shoe or sock, or the like.

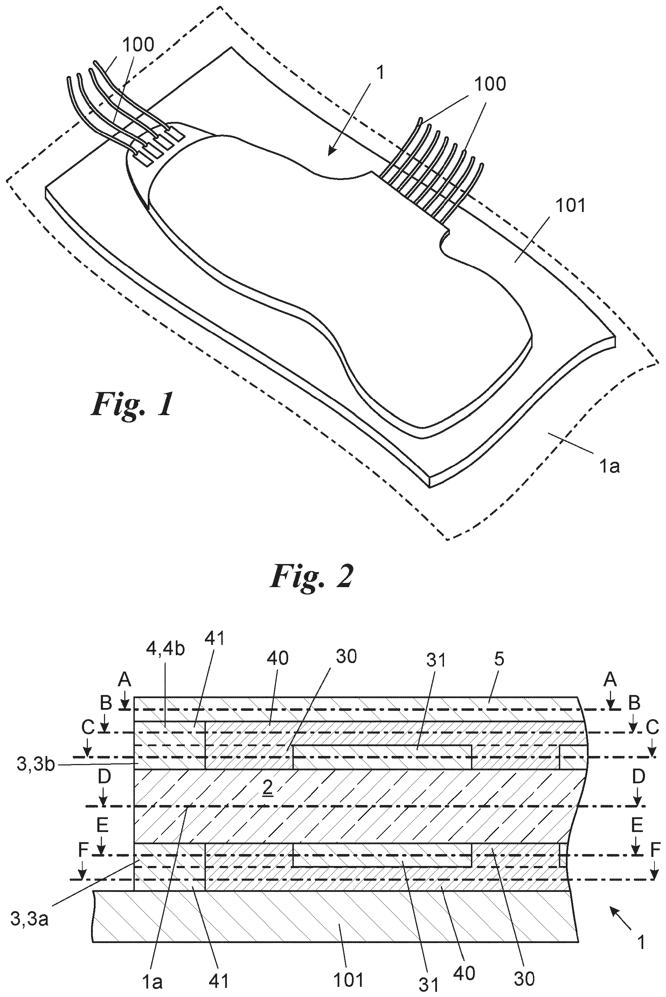

The sensor membrane 1 defines a prevalent development surface **1a,** it is therefore substantially two-dimensional. It therefore defines a transverse direction, a cross-section of which can be seen in Fig. 2, perpendicular to the same surface of prevailing development 1a and preferably less than 1 cm in size, more preferably less than 5 mm. It is also substantially flexible, in the sense that it is deformable by bending along the prevalent development surface 1a manually and without substantial effort. It preferably has a bending strength along said surface that is less than or similar to the bending strength given by the substrate 101 to which it is coupled.

It is also preferably elastic, thus elastically deformable preferably to a size of at least 110% along the prevailing development plane 1a.

The sensor membrane 1 comprises a sensitive layer **2** made of a sensitive material, extending predominantly along said prevalent development surface 1a.

The sensitive material 2 is capable of varying its electrical resistance, upon the variation of an external variable, preferably pressure, or other chemical/physical variables, such as temperature, strain and the like.

The sensitive layer 2 is piezoresistive fabric.

One such fabric is for example marketed by the company Eeonyxwith the trade mark EeonTex. It is also preferably elastic.

The sensor membrane 1 further comprises two first layers **3,** a first lower layer **3a** and a first upper layer **3b,** each in direct contact with one of the two main faces of the sensitive layer 2.

The layers are substantially homogeneous and therefore preferably substantially equal throughout their thickness.

Furthermore, each of the first layers 3 comprises a first insulating portion **31** and a first conductive portion **30.**

The conductive portion 30 preferably defines a plurality of mutually separated electrodes, while the insulating portion preferably occupies the entire remaining portion of the first layer 3. The electrodes of the two first layers 3a and 3b are mutually aligned perpendicular to the prevalent development surface 1a, so as to define, with the interposed sensitive layer portion 2, a pressure sensor or the like. It is also possible that there is only one first layer 3 in contact with the sensitive layer, so as to constitute different types of sensors, for example of bending.

The electrodes defined by the first conductive portions 30 are preferably ordered in rows and columns, not necessarily linear rows and columns but also curved rows and columns and not necessarily all with the same number of electrodes.

The sensor membrane 1 further preferably comprises two second layers **4** each in direct contact with one of the two main free faces of said first layers 3, thus defining a second lower layer **4a,** in contact with the first lower layer 3a, and a first second upper layer **4b,** in contact with the first lower layer 3b. In the case where there is only one first layer 3 there is also preferably only one second layer 4.

Each of the second layers 4 preferably comprises at least one second conductive portion **40** defining electrical connections **40a** at least between the first conductive portion 30, then the electrodes, and electrical support connections **40b** suitable to support external electrical connections **100.** The electrical support connections 40b are preferably rectangular plates, suitable to be connected to electrical wires or the like.

Furthermore, preferably, a second conductive portion 40, for example that of the second lower layer 4a, defines electrical connections 40a joining along one and the same electrical connection electrodes ordered along the same line. At the same time, the other second conductive portion 40, for example that of the second upper layer 4b, defines electrical connections 40a joining along the same electrical connection electrodes ordered along the same column.

The second layers 4a may also comprise second insulating portions **41,** again preferably complementary to the second conductive portions 40 along the second layer 4.

The sensor membrane 1 may also comprise one or two third layers **5,** in contact with said second layers 4 and preferably totally insulating, and one of them may coincide with the support 101.

Said layers may also not be perfectly homogeneous and regular, the important thing being that, preferably, the second conductive portion, and in particular the electrical connections 40a are not in direct contact with the sensitive layer 2.

The said first layers 3 and second layers 4 are made of materials that are solidifiable at room temperature.

These are so-called inks or polymers that polymerise at room temperature or substances that dry or otherwise solidify, possibly because they are mixed with other substances as is the case with two-component polymers or in the case of catalysts, in contact with the air or external environment and at room temperature or in contact with UV light or the like.

Preferably, the first and second insulating layers 31 and 41 are in the same material, and the first and second conductive layers 30 and 40 are in the same material.

The conductive portions 30, 40 are preferably in conductive ink, more preferably in conductive ink of the type. Silver, for example known under the trade name of Silver Ink and marketed by the companyEptatech.

The insulating portions 31, 41 are preferably made of a non-conductive polymer. For example, they are made of polyester.

The sensor membrane 1 is combined with external electrical connections and control and signal processing means.

The invention also defines a new process for making a sensor membrane 1 preferably of the type described above.

The process comprises making either the first and second layers 3 and 4 by a transfer process, which is known in the textile industry for printing designs and the like on clothing. The transfer printing process, or transfer printing, are process in which the material to be printed is first laid on a particular paper called transfer paper and itself known to the technician in the branch. Deposition takes place using various techniques, which are known in themselves, and in this case is preferably done by screen printing or 3D printing.

The print made on transfer paper is transferred to the substrate on which it is to be applied by applying heat, e.g. by means of a hot press or similar. Heat in fact enables the transfer, in some cases due to the sublimation of the transferred material or other known processes.

In the present case the printing and transfer of the first and second conductive portions 30 and 40, is preferably carried out using conductive inks preferably of the type previously mentioned.

The insulating portions 31, 41, on the other hand, are preferably made of non-conductive polymers which allow transfer printing, for example of the type previously mentioned.

The transfer printing of the first and second layers 3 and 4, made on transfer papers, can be transferred directly onto the sensitive layer 2, or, onto a different substrate, in particular onto the substrate 101. The transfer process then achieves adhesion of the first or second layers 3 and 4 to the supports 2 or 101, possibly with the support of glue, preferably not positioned in correspondence with the first conductive portions 30 so that these can, preferably by deforming, come into contact, even if not entirely, with the sensitive layer 2. Finally, preferably, the support 101, to which a first and second layer 3 and 4 have been joined by transfer, is bound to the sensitive layer 2, for example by stitching or otherwise.

In detail, in the case where the first and second layers 3 and 4 are transferred directly onto the sensitive layer 2 said second layers 4 are initially deposited on said transfer paper. In detail, the second conductive portion 40 is deposited on the transfer paper. The insulating portions 31, 41 of the first and second layers 3 and 4 are then deposited. They are deposited in such a way as to cover the second conductive portion 40 leaving openings for the electrodes. It is then deposited the first conductive portion 30 which forms said electrodes. The deposition of the conductive portions 30, 40 also defines, not in contact with the sensitive layer 2 but covered and in contact with the insulating portions 31, the electrical connections 40a and the supporting electrical connections 40b previously described.

Upstream of this process, if necessary, the third layer 5 in insulating material is printed. Said layers are then transferred, by means of a transfer process, from the transfer paper to the sensitive layer 2. The outer part, comprising the first layer 3, then becomes the inner part in contact with the sensitive layer 2.

Conversely, in the event that the conductive portion 30, 40, e.g. that of the first and second layers 3 or upper 4, were transferred to the substrate 101, the first layers 3 are initially deposited on said transfer paper. In detail, the insulating portion 31 and 41 are deposited on the transfer paper, leaving openings for the electrodes. The conductive portions 30, 40 are then preferably deposited. In particular, the first conductive portion 30 covers the openings and is directly in contact with the transfer paper, while the second conductive portion is in contact with the insulating portions 31 and 41.

Said layers are then transferred, by a transfer process, from the transfer paper to the substrate 101. The outer portion, comprising the second layer 4, then becomes the inner portion in contact with the support 101. Conversely, the inner part, prior to transfer in contact with the transfer paper, of piezoresistive material 2.

In a preferred process, the two sides of the sensitive layer 2 are one transferred to the sensitive layer 2 itself and the other to the substrate 101.

The operation of the sensor membrane 1 previously described in structural terms is as follows.

The sensor membrane 1 is placed in correspondence with the support 101 placed in correspondence with the portion of the body that is to be monitored, for example the sole of a shoe or other portion of a garment or even more.

The body, during movement, causes forces and accelerations on the sensor membrane 1. These forces and accelerations deform the piezoresistive material layer 2, which consequently varies its electrical resistance.

In order to measure this resistance, e.g. relative to a specific electrode, electromagnetic signals are sent from one side, e.g. from the underside, of the membrane 2 to an electrode array including the electrode being measured.

On the opposite side, the received signal is detected, for example in the column of electrodes including the electrode under measurement. The electrical output signal from the precise electrode is then measured.

By measuring the electrical output signal and correlating it to the input signal, it is possible to calculate the resistance and thus the strain on the membrane 1 at the precise point.

It is then possible to repeat the measurement on different electrodes and repeat it to obtain the desired results.

The sensor membrane 1 according to the invention achieves important advantages. Indeed, the membrane itself allows for precise and point measurements along its prevailing area of extension.

A further advantage is that the process for making a sensor membrane 1 makes it possible to obtain a sensor by transferring the conductive portions 30 and/or 40 directly onto the "sensitive" part, i.e. the on the piezoresistive sensitive layer 2, and thus to pick up the signal directly without intermediate elements. The sensitive layer 2 and the conductive portions 30 and/or 40 therefore go to substantially create a single mono-layer element allowing to have a sensor membrane 1 characterized by an "active" part and therefore able to obtain and transmit the mono-layer signal.

In particular, with a piezoresistive fabric sensitive layer 2, the transfer of the conductive portions 30 and 40 directly on the sensitive layer 2 allows to have a sensor membrane 1 substantially realized in a single fabric layer, that is in two inseparable layers and therefore with high resistance and duration.

This aspect of a sensor membrane 1 identifiable in a fabric layer, together with the high strength of the bond between the sensitive layer 2 and the conductive portions 30 and/or 40 given by the transfer process, guarantee the same membrane 1 the ability to be integrated in a usable garment (therefore deformable in use) without degrading the quality and performance of the sensor membrane 1.

In addition, the sensor membrane 1 is very flexible and easy to wear, particularly as an insole for footwear or other items. In fact, it is exclusively a printed fabric, very flexible and elastic.

Finally, the sensor membrane 1 is inexpensive and robust, since it is not made up of complex components and can be made to measure using the described processes. The invention is susceptible to variations within the scope of the claims.

## Claims

1. Process for making a flexible sensor membrane (1) defined by a prevalent development surface (1a) and comprising a sensitive layer (2), being piezoresistive fabric capable of varying a property when an external variable changes, extending mainly along said prevalent development surface (1a),
- said process being **characterised by** the fact of comprising
- the deposition of conductive portions (30, 40) in solidifiable material at room temperature, on a transfer paper,
- the transfer, by means of a transfer process, of said conductive portions (30, 40) directly onto said sensitive layer (2).

2. Process for making a sensor membrane (1) according to claim 1, comprising deposing further conductive portions (30, 40) in solidifiable material at room temperature, on a transfer paper, transferring said further conductive portions (30, 40) onto a support (101) and joining said support (101) with said sensitive layer (2), so that said further conductive portions (30, 40) are in direct contact with one of said main faces of said sensitive layer (2).

3. Process for making a sensor membrane (1) according to at least one preceding claim, wherein the transfer of said conductive portions (30, 40) occurs on said sensitive layer (2) on both of said main faces.

4. Process for making a sensor membrane (1) according to any preceding claim, wherein said conductive portions (30, 40) are made by screen printing.

5. Process for making a sensor membrane (1) according to at least one preceding claim, wherein said conductive portions (30, 40) are made by 3D printing.

6. Process for making a sensor membrane (1) according to at least one preceding claim, wherein said conductive portions (30, 40) are made in conductive ink.

7. Process for making a sensor membrane (1) according to any preceding claim, wherein said conductive ink is Silver.

8. Process for making a sensor membrane (1) according to a preceding claim, comprising deposing two insulating portions (31, 41) of solidifiable material at room temperature on a transfer paper and transferring them together with said conductive portions (30, 40).

9. Process for making a sensor membrane (1) according to the preceding claim, wherein said room temperature solidifiable material making said insulating portions (31, 41) is a non-conductive polymer that cures at room temperature.

## Patentansprüche

1. Verfahren zur Herstellung einer flexiblen Sensormembran (1), die durch eine vorwiegende Entwicklungsebene (1a) definiert wird und umfassend eine empfindliche Schicht (2), bestehend aus piezoresistivem Gewebe, das in der Lage ist, eine Eigenschaft zu verändern, wenn sich eine externe Variable ändert, wobei sie sich hauptsächlich entlang der vorwiegenden Entwicklungsebene (1a) erstreckt,
- wobei das Verfahren **dadurch gekennzeichnet ist, dass** es umfasst:
- die Ablagerung von leitfähigen Abschnitten (30, 40), aus bei Raumtemperatur verfestigbarem Material, auf einem Transferpapier,
- die Überführung der leitfähigen Abschnitte (30, 40) mittels eines Transferverfahrens direkt auf die empfindliche Schicht (2).

2. Verfahren zur Herstellung einer Sensormembran (1) nach Anspruch 1, umfassend Ablegen weiterer leitfähiger Abschnitte (30, 40) aus bei Raumtemperatur verfestigbarem Material auf einem Transferpapier, Überführen der weiteren leitfähigen Abschnitte (30, 40) auf einen Träger (101) und Verbinden des Trägers (101) mit der empfindlichen Schicht (2), so dass die weiteren leitfähigen Abschnitte (30, 40) in direktem Kontakt mit einer der Hauptflächen der empfindlichen Schicht (2) stehen.

3. Verfahren zur Herstellung einer Sensormembran (1) nach zumindest einem der vorhergehenden Ansprüche, wobei die Überführung der leitfähigen Abschnitte (30, 40) auf die empfindliche Schicht (2) auf beiden Hauptflächen erfolgt.

4. Verfahren zur Herstellung einer Sensormembran (1) nach einem der vorhergehenden Ansprüche, wobei die leitfähigen Abschnitte (30, 40) durch Siebdruck hergestellt werden.

5. Verfahren zur Herstellung einer Sensormembran (1) nach mindestens einem vorhergehenden Anspruch, wobei die leitfähigen Abschnitte (30, 40) durch 3D-Druck hergestellt werden.

6. Verfahren zur Herstellung einer Sensormembran (1) nach mindestens einem vorhergehenden Anspruch, wobei die leitfähigen Abschnitte (30, 40) aus leitfähiger Tinte bestehen.

7. Verfahren zur Herstellung einer Sensormembran (1) nach einem der vorhergehenden Ansprüche, wobei die leitfähige Tinte Silber ist.

8. Verfahren zur Herstellung einer Sensormembran (1) nach einem vorhergehenden Anspruch, umfassend Ablegen zwei isolierender Abschnitten (31, 41) aus bei Raumtemperatur verfestigbarem Material auf einem Transferpapier und Überführen derselben zusammen mit den leitfähigen Abschnitten (30, 40).

9. Verfahren zur Herstellung einer Sensormembran (1) nach dem vorhergehenden Anspruch, wobei das bei Raumtemperatur verfestigbare Material, das die isolierenden Abschnitte (31, 41) bildet, ein nichtleitfähiges Polymer ist, das bei Raumtemperatur aushärtet.

## Revendications

1. Procédé de fabrication d'une membrane capteur flexible (1) définie par une surface de développement prévalente (1a) et comprenant une couche sensible (2), étant un tissu piézorésistif capable de faire varier une propriété lorsqu'une variable externe change, s'étendant principalement le long de ladite surface de développement prévalente (1a),
- ledit procédé étant **caractérisé en ce qu'**il comprend
- le dépôt de portions conductrices (30, 40) en matériau solidifiable à température ambiante, sur un papier de transfert,
- le transfert, au moyen d'un procédé de transfert, desdites portions conductrices (30, 40) directement sur ladite couche sensible (2).

2. Procédé de fabrication d'une membrane capteur (1) selon la revendication 1, comprenant le dépôt de portions conductrices supplémentaires (30, 40) en matériau solidifiable à température ambiante, sur un papier de transfert, le transfert desdites portions conductrices supplémentaires (30, 40) sur un support (101) et l'assemblage dudit support (101) avec ladite couche sensible (2), de sorte que lesdites portions conductrices supplémentaires (30, 40) soient en contact direct avec l'une des dites faces principales de ladite couche sensible (2).

3. Procédé de fabrication d'une membrane capteur (1) selon au moins une des revendications précédentes, dans lequel le transfert desdites portions conductrices (30, 40) a lieu sur ladite couche sensible (2) sur les deux faces principales de celle-ci.

4. Procédé de fabrication d'une membrane capteur (1) selon l'une quelconque des revendications précédentes, dans lequel lesdites portions conductrices (30, 40) sont réalisées par sérigraphie.

5. Procédé de fabrication d'une membrane capteur (1) selon au moins une des revendications précédentes, dans lequel lesdites portions conductrices (30, 40) sont réalisées par impression 3D.

6. Procédé de fabrication d'une membrane capteur (1) selon au moins une des revendications précédentes, dans lequel lesdites portions conductrices (30, 40) sont réalisées en encre conductrice.

7. Procédé de fabrication d'une membrane capteur (1) selon l'une quelconque des revendications précédentes, dans lequel ladite encre conductrice est de l'argent.

8. Procédé de fabrication d'une membrane capteur (1) selon une revendication précédente, comprenant le dépôt de deux portions isolantes (31, 41) en matériau solidifiable à température ambiante sur un papier de transfert et leur transfert avec lesdites portions conductrices (30, 40).

9. Procédé de fabrication d'une membrane capteur (1) selon la revendication précédente, dans lequel le matériau solidifiable à température ambiante constituant lesdites portions isolantes (31, 41) est un polymère non conducteur qui durcit à température ambiante.
